# EUROPÄISCHE PATENTANMELDUNG

(11) **EP 2 682 519 A1**
(43) Veröffentlichungstag der Anmeldung: **08.01.2014**
(21) Anmeldenummer: 12174598.8
(22) Anmeldetag: 02.07.2012
(51) Int. Cl.: D06M 23/10, D06P 1/94, C08G 65/329

(54) **Verfahren und Zusammensetzungen für die Ausrüstung oder Färbung von Fasermaterialien**

(71) Anmelder: Huntsman Textile Effects (Germany) GmbH, 86462 Langweid a. Lech (DE)
(72) Erfinder: Chrobaczek, Harald, 86153 Augsburg (DE); Tschida, Günther, 86830 Schwabmünchen (DE); Refle, Tanja, 86641 Rain-Staudheim (DE); Siewers, Ernst Jan, 1815 GG Alkmaar (NL)

(57) **Zusammenfassung**

Zusammensetzungen, welche ein spezielles ethoxiliertes/propoxiliertes Produkt und daneben ein Alkylencarbonat, ein Epoxysilan oder ein Polysiloxan enthalten, eignen sich für die Ausrüstung oder Färbung von Fasermaterialien. Auch Umsetzungsprodukte der oben genannten Produkte sind für diese Anwendungszwecke gut geeignet. Die genannten Produkte werden bevorzugt als Lösungen in superkritischem Kohlendioxid verwendet.

## Beschreibung

Die Erfindung betrifft Zusammensetzungen, welche Produkte und/oder Produktgemische und/oder Umsetzungsprodukte enthalten. Sie betrifft ferner Lösungen solcher Zusammensetzungen in superkritischem Kohlendioxid und Verfahren, bei denen diese Lösungen verwendet werden.

Es ist bekannt, zur Ausrüstung oder Färbung von Fasermaterialien Zusammensetzungen zu verwenden, welche in superkritischem Kohlendioxid gelöst sind. Dies geht beispielsweise hervor aus "Supercritical Dyeing of Polyester Fibers in a mini-plant possessing internal circulator" in der CA-Publikation 155: 564784 c (Referat über Sen'i Gakkaishi 2011, 67(2), S. 27 - 33), sowie aus der WO 94/18264 A1, der EP 1 126 072 A2, der DE 39 06 724 A1, der EP 1 809 806 B1, der WO 2004/009897 A1, sowie der EP 0 846 803 B1.

Ein Nachteil bekannter Verfahren zur Behandlung von Fasermaterialien in superkritischem Kohlendioxid besteht darin, daß die gelösten Produkte zwar häufig in superkritischem Kohlendioxid gut löslich sind, nicht jedoch in Wasser. Dadurch ist oft der Spielraum eingeengt, was Auswahl von Produkten betrifft, die wegen ihrer günstigen Eigenschaften zusätzlich in der Lösung verwendet werden sollen. Außerdem ist es aus dem genannten Grund bei bekannten Verfahren häufig nicht möglich, den Fasermaterialien hydrophile Eigenschaften in einem gewünschten Ausmaß zu vermitteln.

Der vorliegenden Erfindung lag die Aufgabe zugrunde, die Nachteile bekannter Zusammensetzungen bzw. Verfahren zu vermeiden und Zusammensetzungen bzw. Lösungen solcher Zusammensetzungen in superkritischem Kohlendioxid zur Verfügung zu stellen, mit welchen sich Fasermaterialien behandeln oder färben lassen und wobei den Fasermaterialien hydrophile Eigenschaften vermittelt werden können, die in weiten Bereichen gesteuert werden können.

Die Aufgabe wurde gelöst einerseits durch ein Verfahren zur Ausrüstung oder Färbung von Fasermaterialien, wobei auf die Fasermaterialien eine Lösung appliziert wird, welche ein Produkt der Formel (la) und/oder der Formel (Ib), jeweils gelöst in einem flüssigen Produkt in superkritischem Zustand, enthält und/oder welche ein Produkt enthält, das erhältlich ist durch Umsetzung eines Produkts oder eines Gemischs von Produkten der Formel (la) und/oder der Formel (Ib) mit einem oder mehreren Produkten der Formeln (II) oder (III) und andererseits durch eine Zusammensetzung, welche mindestens ein Produkt der Formel (la) und/oder (Ib) oder ein Gemisch von Produkten der Formel (la) und/oder (Ib) enthält und welche ein Produkt enthält, das ausgewählt ist aus einem oder mehreren Produkten der Formeln (II) bis (IV) und α-Aminocarbonsäuren, und andererseits durch ein Umsetzungsprodukt eines Produkts oder Produktgemischs der Formel (la) oder (Ib) mit einem oder mehreren Produkten der Formeln (II) oder (III), 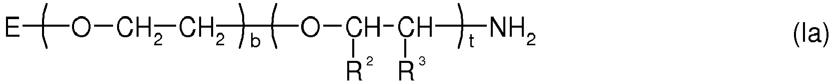 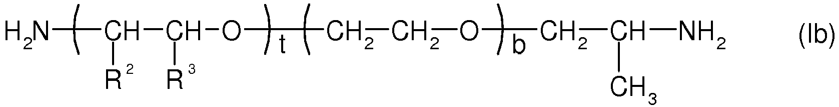 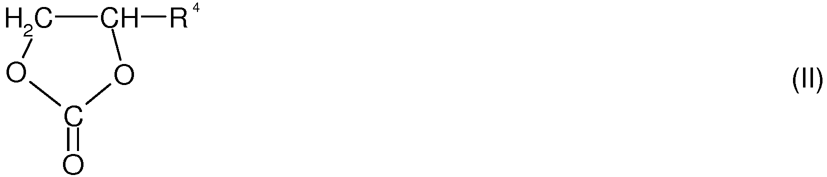 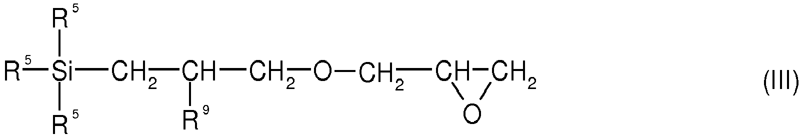 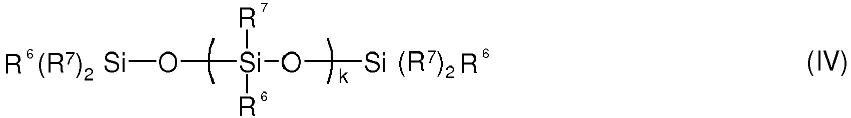 wobei die entstehenden Umsetzungsprodukte weiter zu Oligomeren oder mit Silanen umgesetzt werden können,
worin
E für Wasserstoff oder R¹ steht,
R¹ für einen Alkylrest mit 1 bis 13 Kohlenstoffatomen steht, einer der Reste R² und R³ für CH₃ und der andere für H steht, der Rest R⁴ für H, -CH₃, -CH₂-CH₃ oder -CH₂-OH steht, alle Reste R⁵ unabhängig voneinander für R¹ oder -OH oder einen Rest -OR¹ stehen, die Reste R⁶ unabhängig voneinander für einen Rest R⁵ oder einen Rest R⁸ stehen, alle Reste R⁷ unabhängig voneinander für einen Rest R¹ stehen, alle Reste R⁸ unabhängig voneinander für einen Rest der Formel (V) oder der Formel (VI) stehen,

— X—NH₂ (V)

— Y—NH—Z—NH₂ (VI)

alle Reste R⁹ unabhängig voneinander für Wasserstoff oder -CH₃ stehen,
b im Fall der Formel (la) für 0 oder 1 steht und im Fall der Formel (Ib) für eine Zahl von 0 bis 15 steht,
t für eine Zahl von 5 bis 14 steht und der Quotient b:t in Formel (la) für eine Zahl im Bereich von 0 bis 0,2 steht, und in Formel (Ib) für eine Zahl im Bereich von 0 bis 1,1 steht, k für eine Zahl von 0 bis 1000 steht und
X und Y unabhängig voneinander für einen linearen oder verzweigten Alkylenrest mit 1 bis 4 Kohlenstoffatomen stehen und Z für einen linearen oder verzweigten Alkylenrest mit 2 bis 4 Kohlenstoffatomen steht,
und andererseits durch eine Zusammensetzung, welche ein Produkt der Formel (la) und/oder der Formel (Ib), jeweils gelöst in einem flüssigen Produkt in superkritischem Zustand, enthält, 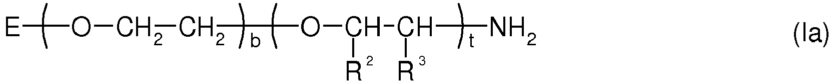 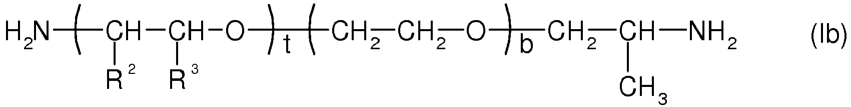 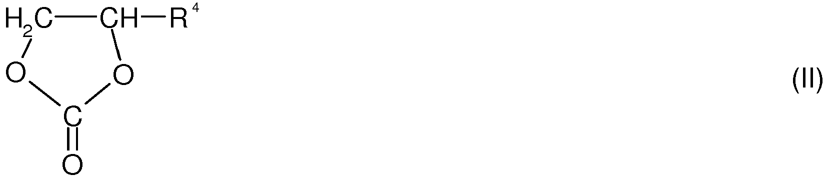 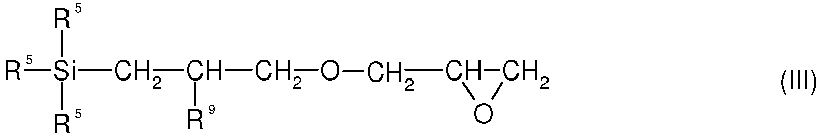 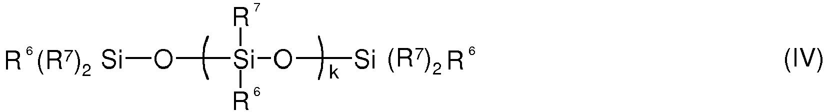 worin
E für Wasserstoff oder R¹ steht,
R¹ für einen Alkylrest mit 1 bis 13 Kohlenstoffatomen steht,
einer der Reste R² und R³ für -CH₃ und der andere für H steht,
der Rest R⁴ für H, -CH₃, -CH₂-CH₃ oder -CH₂-OH steht,
alle Reste R⁵ unabhängig voneinander für R¹ oder -OH oder einen Rest -OR¹ stehen, die Reste R⁶ unabhängig voneinander für einen Rest R⁵ oder einen Rest R⁸ stehen, alle Reste R⁷ unabhängig voneinander für einen Rest R¹ stehen,
alle Reste R⁸ unabhängig voneinander für einen Rest der Formel (V) oder der Formel (VI) stehen,
alle Reste R⁹ unabhängig voneinander für Wasserstoff oder -CH₃ stehen,

— X—NH₂ (V)

— Y—NH—Z—NH₂ (VI)

b im Fall der Formel (la) für 0 oder 1 steht und im Fall der Formel (Ib) für eine Zahl von 0 bis 15 steht,
t für eine Zahl von 5 bis 14 steht und der Quotient b:t in Formel (la) für eine Zahl im Bereich von 0 bis 0,2 steht, und in Formel (Ib) für eine Zahl im Bereich von 0 bis 1,1 steht, k für eine Zahl von 0 bis 1000 steht und
X und Y unabhängig voneinander für einen linearen oder verzweigten Alkylenrest mit 1 bis 4 Kohlenstoffatomen stehen und Z für eine linearen oder verzweigten Alkylenrest mit 2 bis 4 Kohlenstoffatomen steht,
bzw. ein Produkt, das erhältlich ist durch Umsetzung eines Produkts oder eines Gemischs von Produkten der Formel (la) und/oder der Formel (Ib) mit einem oder mehreren Produkten der Formeln (II) oder (III), wobei die entstehenden Umsetzungsprodukte weiter zu Oligomeren oder mit Silanen umgesetzt werden können.

Gegebenenfalls kann die Lösung, welche ein Produkt der Formel (la) und/oder der Formel (Ib) enthält, zusätzlich ein Produkt enthalten, das ausgewählt ist aus einem oder mehreren Produkten der Formeln (II) bis (IV) und α-Aminocarbonsäuren.

Ein Verfahren zur Ausrüstung oder Färbung von Fasermaterialien gemäß Anspruch 1 oder 2 und eine Verwendung gemäß Anspruch 22 ist in erster Linie Gegenstand der vorliegenden Erfindung.

Erfindungsgemäße Zusammensetzungen oder erfindungsgemäße Umsetzungsprodukte werden bevorzugt in Form von Lösungen in einer superkritischen Flüssigkeit, insbesondere in superkritischem Kohlendioxid verwendet. Die Vorteile von Lösungen von erfindungsgemäßen Zusammensetzungen oder Umsetzungsprodukten in superkritischem Kohlendioxid gegenüber Lösungen oder Emulsionen in Wasser liegen im ökonomischen und vor allem auch im ökologischen Bereich. Denn einerseits erfordert die Entfernung von Wasser nach einem Ausrüst- bzw. Färbeverfahren nicht unbeträchtliche Mengen an Energie, andererseits kann Nebenprodukte enthaltendes Prozeßwasser zu Abwasserbelastung führen.

Unter "superkritischer Flüssigkeit" ist im Zusammenhang mit der Erfindung ein Medium (fluid) zu verstehen, bei dem sowohl Druck als auch Temperatur oberhalb des kritischen Punkts dieses Mediums liegen.

Außerdem sind solche Lösungen erfindungsgemäß, bei denen ein Produkt der Formel (la) und/oder der Formel (Ib) in superkritischer Flüssigkeit gelöst ist.

Die erfindungsgemäßen Zusammensetzungen enthalten mindestens ein Produkt der oben und in Anspruch 11 oder 12 definierten Art. Vorzugsweise wird hierzu ein Produkt verwendet, das sowohl in Wasser als auch in superkritischem Kohlendioxid mindestens zu je 0,0001 Mol pro Mol Wasser bzw. superkritischem Kohlendioxid löslich ist. Diese Eigenschaft führt dazu, daß es möglich ist, mit der Zusammensetzung Fasermaterialien zu behandeln bzw. auszurüsten oder zu färben, wobei dem Fasermaterial gezielt hydrophile Eigenschaften vermittelt werden können. Ferner kann in einigen Fällen eine Zusammensetzung, welche ein Produkt der Formel (Ia) bzw. (Ib) enthält, als Speicher für CO₂ dienen. Vorzugsweise beträgt die Löslichkeit in Wasser bzw. superkritischem Kohlendioxid 0,001 Mol bis 1 Mol pro Mol Wasser bzw. superkritischem Kohlendioxid. Die Angaben zur Löslichkeit in Wasser bzw. superkritischem Kohlendioxid beziehen sich im Fall von Wasser auf Normaldruck und Raumtemperatur und im Fall von superkritischem Kohlendioxid auf einen Druck von 250 bar und eine Temperatur von 120°C. Da erfindungsgemäße Zusammensetzungen Gemische sein können, welche ein oder mehrere Produkte der Formel (Ia) oder (Ib) und zusätzlich ein oder mehrere Produkte der Formeln (II) bis (IV) oder α-Aminosäure enthalten, beziehen sich die oben genannten Zahlenangaben auf die Gesamtzahl der Mole dieser Mischungspartner.

Die Löslichkeit von erfindungsgemäßen Zusammensetzungen und Umsetzungsprodukten wird nach der weiter unten beschriebenen Methode bestimmt.

Vor allem Zusammensetzungen, welche Produkte der Formel (Ia) oder (Ib) oder Gemische hiervon im Gemisch mit Produkten der Formeln (II) bis (IV) oder mit α-Aminocarbonsäuren enthalten, und die genannten Umsetzungsprodukte eignen sich hervorragend für die Ausrüstung oder Färbung von Fasermaterialien. Als α-Aminocarbonsäuren kommen beispielsweise L-Asparaginsäure und L-Glutaminsäure in Frage. Vorzugsweise werden diese Zusammensetzungen und die erfindungsgemäßen Umsetzungsprodukte in Form von Lösungen in superkritischem Kohlendioxid verwendet. Erfindungsgemäße Zusammensetzungen können außer den oben und in Anspruch 1 genannten Produkten weitere Bestandteile enthalten, z.B. oberflächenaktive Substanzen in Form von Ethoxilaten.

Vorzugsweise steht der Rest E in Formel (la) für die Methylgruppe oder den Isotridecylrest. Ferner sind Produkte besonders gut geeignet für die Ausrüstung oder Färbung von Fasermaterialien, bei denen in Formel (Ia) der Wert von t eine Zahl von 8 bis 10 ist. Besonders gut geeignet für den genannten Zweck sind Produkte, bei denen in Formel (III) mindestens einer der Reste R⁵ für -OR¹ steht.

Vorzugsweise sind bei Produkten der Formel (IV) die beiden Reste R⁶, die an die beiden endständigen Siliciumatome gebunden sind, Reste der Formel, welche der Definition des Restes R⁵ entspricht.

Besonders gut geeignet für die Ausrüstung oder Färbung von Fasermaterialien sind Lösungen, welche mindestens ein Produkt der genannten Produkte bzw. Produktmischungen in einem flüssigen Produkt in superkritischem Zustand z.B. in superkritischem Ethan oder Propan enthalten. Als Lösungsmittel in superkritischem Zustand ist superkritisches Kohlendioxid bevorzugt. Aus diesem Grund wird im Folgenden nur superkritisches Kohlendioxid genannt, obwohl auch andere superkritische Flüssigkeiten in Betracht kommen. Bei diesen Lösungen liegt die Konzentration des Produkts oder der Produktmischung in superkritischem Kohlendioxid bevorzugt im Bereich von 0,0005 bis 0,5 Gew%.

Die Lösungen in superkritischem Kohlendioxid können außer den erfindungsgemäßen Zusammensetzungen und Umsetzungsprodukten zusätzlich Produkte enthalten, welche für die Textilausrüstung oder -färbung oder für die Behandlung von Polymermaterialien geeignet sind. Solche zusätzlichen Produkte sind dem Fachmann aus dem Stand der Technik bekannt. Gut geeignet als zusätzliche Produkte sind beispielsweise Acrylsäureester oder Polydialkylsiloxane, insbesondere kurzkettige Polydimethylsiloxane. Bei diesen Polydimethylsiloxanen kann ein Teil der Methylgruppen durch stickstoffhaltige Reste substituiert sein, beispielsweise durch Reste der Formel (V) oder (VI). Die Lösungen in superkritischem Kohlendioxid können ferner Kapseln enthalten, in die Produkte eingeschlossen sind, welche permanent auf Geweben verankert werden sollen. Die Lösungen erfindungsgemäßer Zusammensetzungen oder erfindungsgemäßer Umsetzungsprodukte in superkritischem Kohlendioxid können gegebenenfalls Produkte enthalten, welche durch Reaktion dieser Zusammensetzungen oder Umsetzungsprodukte mit Kohlendioxid entstehen.

Erfindungsgemäße Zusammensetzungen oder Umsetzungsprodukte, insbesondere deren Lösungen in superkritischem Kohlendioxid eignen sich sehr gut zur Behandlung/Ausrüstung oder Färbung von Fasermaterialien oder für die Behandlung von Polymermaterialien, z.B. von Holzartikeln oder Artikeln aus Kunststoff. Auch Lösungen in superkritischem Kohlendioxid, die nur Produkte der Formel (la) oder (Ib) enthalten, sind für die angegebenen Verwendungszwecke gut geeignet. Im Fall von Färbungen enthalten die Lösungen natürlich noch ein oder mehrere Farbstoffe. Beispiele für geeignete Farbstoffe für die Verwendung in Lösungen in superkritischem Kohlendioxid sind im eingangs genannten Stand der Technik genannt. Gut geeignet als weitere Zusätze für Ausrüstprozesse sind beispielsweise folgende Produkte: Permethrin und Deltamethrin. Durch die Verwendung von Permethrin bei der Ausrüstung von Geweben kann gegebenenfalls ein "Insect-repellent"-Effekt erzielt werden. Erfindungsgemäße Zusammensetzungen und Umsetzungsprodukte, insbesondere deren Lösungen in superkritischem Kohlendioxid, eignen sich außerdem ausgezeichnet für spezielle Ausrüstungsprozesse, z.B. Egalisierungsprozesse, welche an bereits gefärbtem Fasermaterial durchgeführt werden. Für die genannten Verwendungszwecke kann das Fasermaterial in den Extraktor der unten genannten Apparatur eingeführt werden, wobei in den Extraktor eine erfindungsgemäße Lösung eingebracht wird.

Die Fasermaterialien, welche mit erfindungsgemäßen Zusammensetzungen oder Umsetzungsprodukten bzw. erfindungsgemäßen Lösungen in superkritischem Kohlendioxid behandelt/ausgerüstet oder gefärbt werden können, sind unter anderem Gewebe oder Gewirke aus Polypropylenfasern, Carbonfasern, Baumwolle oder Wolle, Polyester- oder Polyamidfasern für technische oder Bekleidungsartikel. Die Ausrüstung oder Färbung kann nach Methoden erfolgen, welche dem entsprechenden Fachmann bekannt sind, wie z.B. in dem eingangs genannten Stand der Technik beschrieben.

Erfindungsgemäße Zusammensetzungen enthalten entweder mindestens ein Produkt der oben genannten Formel (Ia) oder der Formel (Ib) oder ein Gemisch solcher Produkte und außerdem ein Produkt, das ausgewählt ist aus einem oder mehreren Produkten der Formeln (II) bis (IV) und α-Aminocarbonsäuren. Erfindungsgemäße Umsetzungsprodukte sind Produkte welche durch Umsetzung eines Produkts der Formel (la) oder (Ib) oder Gemischen davon mit einem oder mehreren Produkten der Formeln (II) bis (III) entstehen. Diese Umsetzungsprodukte können gegebenenfalls weiter zu Oligomeren umgesetzt oder mit Silanen weiter umgesetzt werden.

Die Produkte der Formeln (la) und (Ib) sind handelsüblich und aus dem Stand der Technik bekannt. Beispiele sind Produkte der Gamme JEFFAMINE^{®} der Firma Huntsman Corp., insbesondere Produkte der Gamme JEFFAMINE^{®} der M-Serie, der D-Serie und der ED-Serie. Besonders gut geeignet für erfindungsgemäße Zusammensetzungen und Umsetzungsprodukte und Lösungen ist JEFFAMINE^{®} M-600 Polyetheramine.

Produkte der Formel (II), nämlich Alkylencarbonate, welche gegebenenfalls substituiert sind, gehören ebenfalls als handelsübliche Produkte zum Stand der Technik. Beispiele sind Produkte der Gamme JEFFSOL^{®} der Firma Huntsman Corp. Gut geeignet für erfindungsgemäße Zusammensetzungen und Umsetzungsprodukte ist als Produkt der Formel (III) Glycidoxypropylmethyldiethoxysilan oder 3-Glycidoxypropyltrimethoxysilan.

Produkte der Formeln (III) und (IV) sind als Stand der Technik aus der Silikonchemie bekannt. Beispiele sind 3-Glycidoxypropyltrimethoxysilan und SILASTIC^{®} 4-2737 der Firma Dow Corning.

Beispiele für α-Aminocarbonsäuren, welche in Mischung mit Produkten der Formel (la) und/oder (Ib) verwendet werden können, sind L-Asparaginsäure und L-Glutaminsäure.

Erfindungsgemäße Zusammensetzungen enthalten ein Gemisch aus
a) einem oder mehreren Produkten, welche unter Formel (la) oder (Ib) fallen und
b) einem oder mehreren Produkten, ausgewählt aus Produkten der Formeln (II) bis (IV) oder α-Aminocarbonsäuren. Das Mischungsverhältnis kann hierbei z.B. 50 bis 90

Gew.teile an Produkt der Formel (la) oder (Ib) und 10 bis 50 Gew.teile an einer Verbindung der Formel (II) bis (IV) betragen.

Erfindungsgemäße Umsetzungsprodukte sind Produkte, welche durch Umsetzung der oben unter a) genannten Produkte mit unter b) genannten Produkten entstehen können. Diese Umsetzung kann nach allgemein bekannten Methoden erfolgen, welche aus dem Stand der Technik bekannt sind. Es kann angenommen werden, daß die Umsetzung eines Produkts der Formel (la) oder (Ib) mit einem Produkt der Formel (II) über einen Angriff einer Aminogruppe an das C-Atom der Gruppe =C=O unter Ringöffnung abläuft, wobei im Fall der Verbindung der Formel (la) ein Umsetzungsprodukt der Formel 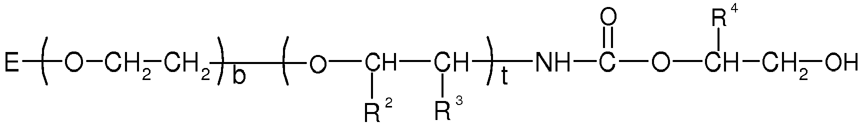 und/oder der Formel 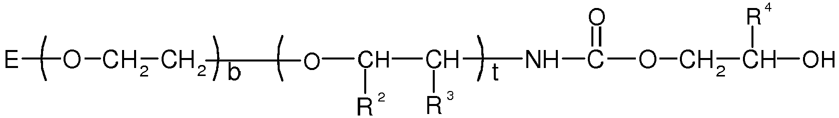 entsteht und im Fall der Verbindung der Formel (Ib) ein Produkt der Formel 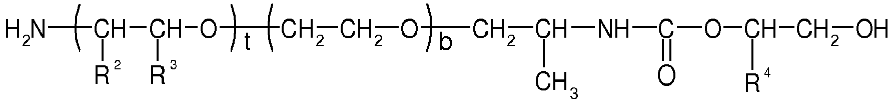 oder ein Isomeres davon entstehen kann, das aus einer anderen Art und Weise der Ringöffnung resultiert, oder ein Produkt entsteht, dessen Formel sich von der letztgenannten dadurch unterscheidet, daß auch die noch freie —NH₂-Gruppe mit dem cyclischen Carbonat unter Ringöffnung reagiert hat.

Bei der Umsetzung von Produkten der Formel (la) oder (Ib) mit Produkten der Formel (III) kann die Reaktion über eine Ringöffnung der Epoxygruppe bzw. eine Substitution am Si-Atom verlaufen, wobei im Fall der Verwendung einer Verbindung der Formel (III) Umsetzungsprodukte folgender Formeln entstehen können: 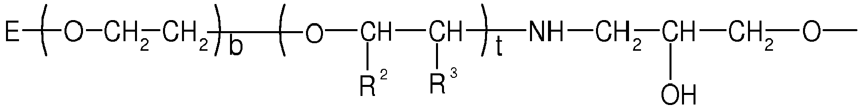 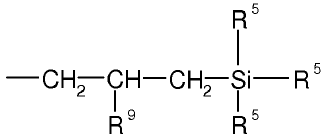 oder 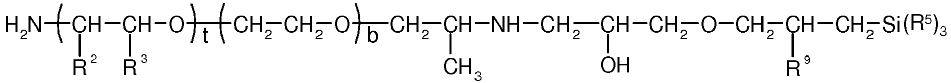 oder einer Formel, die sich von der letztgenannten dadurch unterscheidet, daß deren endständige NH₂-Gruppe ebenfalls mit dem Epoxysilan unter Ringöffnung der Epoxygruppe reagiert hat.

Die genannten Umsetzungen können in einem inerten Lösungsmittel durchgeführt werden oder, in speziellen Fällen, ohne Verwendung eines Lösungsmittels.

Die so entstehenden Umsetzungsprodukte können gegebenenfalls weiter zu Polymeren oder mit Silanen umgesetzt werden.

Superkritisches Kohlendioxid ist bekanntlich Kohlendioxid bei Drucken und Temperaturen oberhalb des kritischen Punkts.

Die Herstellung und die Eigenschaften von superkritischem Kohlendioxid sind im Stand der Technik beschrieben, z.B. in der oben genannten Literaturstelle Sen'i Gakkaishi 2011, 67(2), S. 27 - 33) sowie in der WO 94/18264 A1 und der EP 1 126 072 A2. Erfindungsgemäße Lösungen in superkritischem Kohlendioxid stellt man vorzugsweise her, indem man zuerst eine oder mehrere erfindungsgemäße Zusammensetzungen oder Umsetzungsprodukte herstellt und diese dann in superkritischem Kohlendioxid löst. Im Fall von erfindungsgemäßen Gemischen wird bevorzugt zuerst das Gemisch hergestellt, bevor man es in dem Kohlendioxid löst.

Die Lösungen erfindungsgemäßer Zusammensetzungen oder Umsetzungsprodukte in superkritischem Kohlendioxid können nach aus dem Stand der Technik bekannten Verfahren hergestellt werden, z.B. nach Methoden, welche in Sen'i Gakkaishi 2011, Vol. 67, Nr. 2 (2011), Seiten 27 bis 33, der WO 94/18264, der US 5 709 910 sowie in weiteren, in der Beschreibungseinleitung genannten Dokumenten beschrieben sind.

Geeignete Apparaturen und Methoden zur Herstellung von Lösungen in superkritischem Kohlendioxid können außerdem von der Firma Dyecoo Textile Systems B.V., NL, bezogen werden.

Solche Apparaturen enthalten einen Extraktor. In der Apparatur kann die Lösung von Produkten in superkritischem Kohlendioxid hergestellt werden. Die Applikation der so erhaltenen Lösung auf das Fasermaterial erfolgt in diesem Extraktor.

Mittels einer solchen Apparatur läßt sich auch die Löslichkeit erfindungsgemäßer Zusammensetzungen und Umsetzungsprodukte in superkritischem Kohlendioxid bestimmen. Die Apparatur enthält noch einen Separator. Man gibt das zu untersuchende Produkt in den Extraktor der genannten Apparatur. Anschließend wird Kohlendioxid bei einem Druck von 250 bar bei einer Temperatur von 120°C in den Extraktor eingespeist. Die in superkritischem Kohlendioxid löslichen Bestandteile der Produkte werden weiter in den Separator transportiert. Deren Menge kann dann analytisch bestimmt werden. Die in superkritischem Kohlendioxid unlöslichen Anteile bleiben im Extraktor zurück.

Die Verwendung erfindungsgemäßer Lösungen für die Behandlung/Ausrüstung oder Färbung von Fasermaterialien kann durch Applikation einer solchen Lösung auf das Fasermaterial erfolgen. Es kann in Anlehnung an Verfahren erfolgen, die in der

EP 846 803 B1 beschrieben sind.

Erfindungsgemäße Lösungen in superkritischem Kohlendioxid können gegebenenfalls eine Reinigung des Fasermaterials bewirken, z.B. Entfettung von Wolleartikeln oder Entsilikonisierung von Elasthanfasern.

Die Erfindung wird nachfolgend durch Ausführungsbeispiele veranschaulicht.

### Beispiel 1:

Umsetzung eines Produkts der Formel (la) mit einem Produkt der Formel (II): 88,2 g JEFFAMINE^{®} M-600 werden bei Raumtemperatur vorgelegt. Hierzu werden 11,8 g JEFFSOL^{®} EC zugegeben (JEFFSOL^{®} EC ist ein Produkt der Formel (II) mit R⁴ = H; JEFFAMINE^{®} M-600 ist ein Produkt der Formel (la) mit R¹ = CH₃, b = 1, R² = H, R³ = CH₃ und t = 9).

Das erhaltene Gemisch wird auf 95°C erhitzt und 6 Stunden bei dieser Temperatur gehalten. Anschließend wird auf Raumtemperatur gekühlt. Dabei erhält man ein leicht gelbliches, klares Produkt, das in superkritischem Kohlendioxid von 250 bar und 120°C löslich ist.

### Beispiel 2:

Umsetzung einer Verbindung der Formel (la) mit einer Verbindung der Formel (III) 69,7 g JEFFAMINE^{®} M-600 werden bei Raumtemperatur vorgelegt. Hierzu werden 2,75 g eines Katalysators (Accelerator 399 der Huntsman Corp.) auf Basis Piperazin zugegeben. Die Mischung wird unter Rühren auf 85°C erwärmt und dann mit N₂ gespült und unter N₂ gehalten. Bei weiterem Rühren und bei 85°C werden innerhalb 60 Minuten 27,55 g 3-Glycidoxypropyltrimethoxysilan zugetropft. Man rührt weitere 240 Minuten bei 85°C und kühlt dann auf Raumtemperatur ab. Es resultiert eine leicht gelbliche, klare Flüssigkeit, die in superkritischem Kohlendioxid löslich ist.

### Beispiel 3:

Durch Mischen bei Raumtemperatur wurde eine Zusammensetzung hergestellt, welche ein Produkt der Formel (la) enthielt (das gleiche Produkt wie in Beispiel 1), und außerdem ein Produkt der Formel (IV). Letzteres war ein flüssiges Polydimethylsiloxan, das in der Seitenkette Substituenten der Formel

— CH₂— CH₂— CH₂—NH— CH₂— CH₂—NH₂

aufwies. Dieses Siloxan besaß einen Stickstoffgehalt von etwa 7 Gew% und eine Viskosität von etwa 100 mPa.s bei 20°C.

Die Zusammensetzung enthielt etwa 80 Gew% des Produkts der Formel (la) und etwa 20 Gew% der Verbindung der Formel (IV).

Die enthaltene Zusammensetzung war in superkritischem Kohlendioxid bei einer Konzentration von 0,37 Gew% löslich.

### Beispiel 4:

40,0 g Propylencarbonat (JEFFSOL^{®} PC) werden bei Raumtemperatur vorgelegt. 60,0 g aminofunktionelles Polydimethylsiloxan (3 Gew.% N, aminoethylaminopropylfunktionelle Seitenkette, (CH₃)₃Si-endblockiert) zugegeben und unter Rühren gelöst. Es resultiert eine klare, hellgelbe Flüssigkeit.

In 33,0 g dieser Lösung werden ebenfalls bei Raumtemperatur 5 g MARLIPAL^{®} 013/30 (Isotridecylethoxylat mit 3 EO) eingerührt und klar gelöst. Anschließend wird diese Zusammensetzung in 62 g JEFFAMINE^{®} M-600 (Monoamin) eingerührt.

Es resultiert ebenfalls eine klare, hellgelbe Flüssigkeit.

### Beispiel 5:

Bei diesem Beispiel wurde die Löslichkeit des Produkts JEFFAMINE^{®} ED-600 in superkritischem Kohlendioxid untersucht. JEFFAMINE^{®} ED-600 ist ein Produkt, das unter formel (Ib) von Anspruch I fällt.

Bei einem Druck von 250 bar und einer Temperatur von 75°C wurden folgende Resultate (abweichend von der oben genannten Temperaturangabe) gefunden:

Einspeisung in den (oben beschriebenen) Extraktor: 30,1 g gefunden im Extraktor nach Beendigung des Versuchs: 23,8 g

Produkt-Menge im Separator: 6,1 g

Das Produkt ist weniger in superkritischem Kohlendioxid löslich als JEFFAMINE^{®} M-600, das unter Formel (la) fällt.

### Beispiel 6: Ausrüstungen

Auf Polyestergewebe, gefärbt mit "Disperse Orange 25", wurden Lösungen von JEFFAMINE^{®} M-600 in superkritischem Kohlendioxid appliziert. Dies wurde bei einer Temperatur von 120°C und einem Druck von 250 mPa.sec während einer Zeit von 60 Minuten durchgeführt. Die applizierten Mengen von JEFFAMINE^{®} M-600 betrugen in mehreren Versuchen 7,5 • 10⁻³ ml, 3 • 10⁻³ ml und 5,2 • 10⁻⁴ ml, jeweils bezogen auf 1 g Gewebe.

Die erhaltenen Gewebe zeigten ein gutes Absorbiervermögen gegenüber Wasser (bestimmt nach AATCC 79) und ein gutes Migrationsverhalten von Wasser (Steighöhentest) in vertikaler Richtung. Die hierbei erhaltenen Werte waren deutlich besser als die von nicht-ausgerüstetem Vergleichsgewebe.

Die folgende Tabelle zeigt die Ergebnisse von Messungen.

**Tabelle**

| Probe | Hydrophilie (Tropfentest) | Steighöhentest (wicking-Test) |
|---|---|---|
| 0 (Vergleichsgewebe) | > 60 | 2,0 |
| 1 (7,5 • 10⁻³ ml/g) | 1 | 6,0 |
| 2 (3 • 10⁻³ ml/g) | 4 | 5,5 |
| 3 (5,2 • 10⁻⁴ ml/g) | 1 | 6,0 |

Beim Hydrophilietest (Tropfentest) wird die Zeit in Sekunden bestimmt, die vom Start der Benetzung bis zur vollständigen Benetzung vergeht.

Der Steighöhentest (wicking test) gibt an, bis zu welcher Höhe bei einem senkrecht angebrachten Gewebe eine Benetzung durch Wasser erfolgt (gemessen in cm).

## Patentansprüche

1. Verfahren zur Ausrüstung oder Färbung von Fasermaterialien, wobei auf die Fasermaterialien eine Lösung appliziert wird, welche ein Produkt der Formel (la) und/oder der Formel (Ib), jeweils gelöst in einem flüssigen Produkt in superkritischem Zustand, enthält, 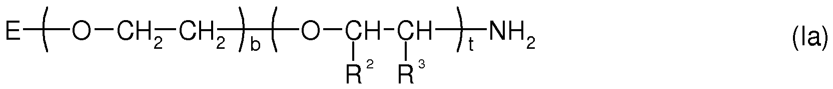 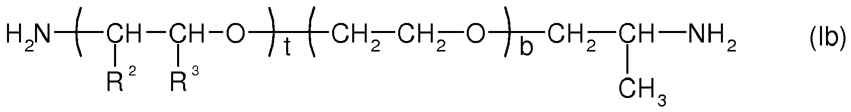 wobei die Lösung gegebenenfalls zusätzlich ein Produkt enthält, das ausgewählt ist aus einem oder mehreren Produkten der Formeln (II) bis (IV) und α-Aminocarbonsäuren, 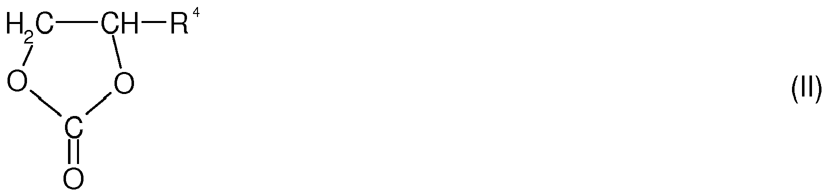 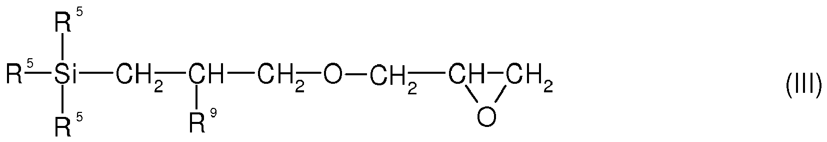 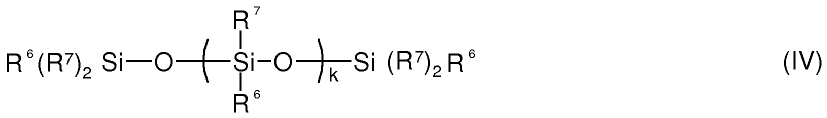 worin E für Wasserstoff oder R¹ steht,
R¹ für einen Alkylrest mit 1 bis 13 Kohlenstoffatomen steht,
einer der Reste R² und R³ für -CH₃ und der andere für H steht,
der Rest R⁴ für H, -CH₃, -CH₂-CH₃ oder ―CH₂-OH steht,
alle Reste R⁵ unabhängig voneinander für R¹ oder -OH oder einen Rest -OR¹ stehen,
die Reste R⁶ unabhängig voneinander für einen Rest R⁵ oder einen Rest R⁸ stehen, alle Reste R⁷ unabhängig voneinander für einen Rest R¹ stehen,
alle Reste R⁸ unabhängig voneinander für einen Rest der Formel (V) oder der Formel (VI) stehen,
alle Reste R⁹ unabhängig voneinander für Wasserstoff oder -CH₃ stehen,
— X—NH₂ (V)
— Y—NH—Z—NH₂ (VI)
b im Fall der Formel (la) für 0 oder 1 steht und im Fall der Formel (Ib) für eine Zahl von 0 bis 15 steht,
t für eine Zahl von 5 bis 14 steht und der Quotient b:t in Formel (la) für eine Zahl im Bereich von 0 bis 0,2 steht, und in Formel (Ib) für eine Zahl im Bereich von 0 bis 1,1 steht,
k für eine Zahl von 0 bis 1000 steht und
X und Y unabhängig voneinander für einen linearen oder verzweigten Alkylenrest mit 1 bis 4 Kohlenstoffatomen stehen und Z für eine linearen oder verzweigten Alkylenrest mit 2 bis 4 Kohlenstoffatomen steht,
und/oder wobei die Lösung ein Produkt enthält, das erhältlich ist durch Umsetzung eines Produkts oder eines Gemischs von Produkten der Formel (la) und/oder der Formel (Ib) mit einem oder mehreren Produkten der Formeln (II) oder (III).

2. Verfahren nach Anspruch 1 **dadurch gekennzeichnet, daß** das flüssige Produkt in superkritischem Zustand superkritisches flüssiges Kohlendioxid ist.

3. Verfahren nach Anspruch 2 **dadurch gekennzeichnet, daß** die Konzentration des Produkts in superkritischem Kohlendioxid im Bereich von 0,0005 bis 0,5 Gew% liegt.

4. Verfahren nach einem oder mehreren der Ansprüche 1 bis 3 **dadurch gekennzeichnet, daß** die Lösung zusätzlich Produkte enthält, die für die Textilausrüstung und/oder die Textilfärbung und/oder für die Behandlung von Polymermaterialien geeignet sind.

5. Verfahren nach einem oder mehreren der Ansprüche 1 bis 4 **dadurch gekennzeichnet, daß** die Lösung als zusätzliche Produkte, Acrylsäureester oder Polydialkylsiloxane enthält, welche durch OH- oder durch OR¹-Gruppen oder durch Reste mit Aminogruppen substituiert sein können.

6. Verfahren nach einem oder mehreren der Ansprüche 1 bis 5 **dadurch gekennzeichnet, daß** die Lösung ein Produkt enthält, das sowohl in Wasser als auch in superkritischem Kohlendioxid mindestens zu je 0,0001 Mol pro Mol Wasser bzw. superkritischem Kohlendioxid löslich ist.

7. Verfahren nach einem oder mehreren der Ansprüche 1 bis 6 **dadurch gekennzeichnet, daß** die Lösung ein Produkt enthält, das eine Löslichkeit in Wasser von 0,001 Mol bis 1 Mol pro Mol Wasser und eine Löslichkeit in superkritischem Kohlendioxid von 0,001 Mol bis 1 Mol pro Mol an superkritischem Kohlendioxid aufweist.

8. Verfahren nach einem oder mehreren der Ansprüche 1 bis 7 **dadurch gekennzeichnet, daß** in Formel (la) R¹ für -CH₃ oder den Isotridecylrest und/oder t für eine Zahl von 8 bis 10 steht.

9. Verfahren nach einem oder mehreren der Ansprüche 1 bis 8 **dadurch gekennzeichnet, daß** in Formel (III) mindestens einer der Reste R⁵ für -OR¹ steht.

10. Verfahren nach einem oder mehreren der Ansprüche 1 bis 9 **dadurch gekennzeichnet, daß** in Formel (IV) die beiden an die endständigen Si-Atome gebundenen Reste R⁶ für R¹ stehen.

11. Zusammensetzung, welche mindestens ein Produkt der Formel (la) und/oder der Formel (Ib), enthält, und welche ein Produkt enthält, das ausgewählt ist aus einem oder mehreren Produkten der Formeln (II) bis (IV) und α-Aminocarbonsäuren, 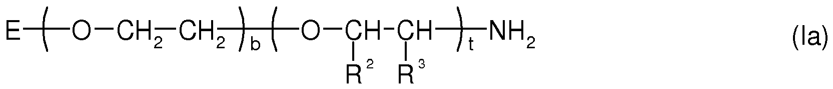 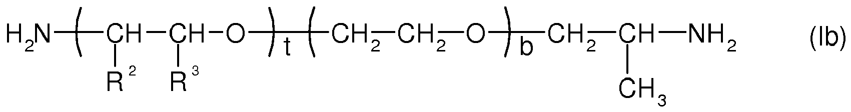 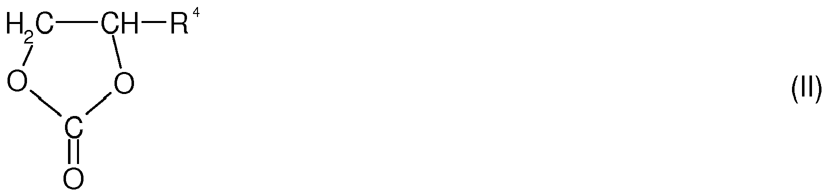 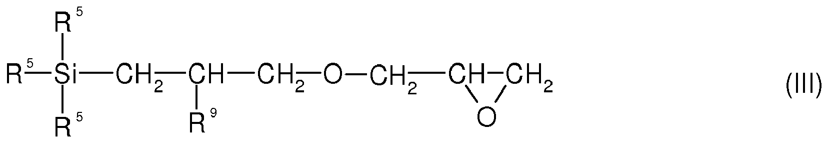 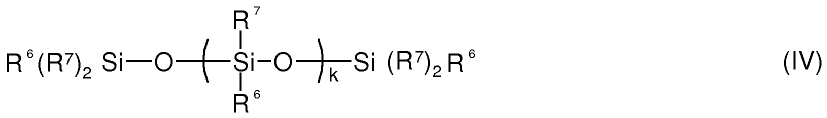 worin
E für Wasserstoff oder R¹ steht,
R¹ für einen Alkylrest mit 1 bis 13 Kohlenstoffatomen steht,
einer der Reste R² und R³ für -CH₃ und der andere für H steht,
der Rest R⁴ für H, -CH₃, -CH₂-CH₃ oder -CH₂-OH steht,
alle Reste R⁵ unabhängig voneinander für R¹ oder -OH oder einen Rest -OR¹ stehen,
die Reste R⁶ unabhängig voneinander für einen Rest R⁵ oder einen Rest R⁸ stehen, alle Reste R⁷ unabhängig voneinander für einen Rest R¹ stehen,
alle Reste R⁸ unabhängig voneinander für einen Rest der Formel (V) oder der Formel (VI) stehen,
alle Reste R⁹ unabhängig voneinander für Wasserstoff oder -CH₃ stehen,
— X—NH₂ (V)
— Y—NH—Z—NH₂ (VI)
b im Fall der Formel (la) für 0 oder 1 steht und im Fall der Formel (Ib) für eine Zahl von 0 bis 15 steht,
t für eine Zahl von 5 bis 14 steht und der Quotient b:t in Formel (la) für eine Zahl im Bereich von 0 bis 0,2 steht, und in Formel (Ib) für eine Zahl im Bereich von 0 bis 1,1 steht,
k für eine Zahl von 0 bis 1000 steht und
X und Y unabhängig voneinander für einen linearen oder verzweigten Alkylenrest mit 1 bis 4 Kohlenstoffatomen stehen und Z für eine linearen oder verzweigten Alkylenrest mit 2 bis 4 Kohlenstoffatomen steht.

12. Produkt erhältlich durch Umsetzung eines Produkts oder eines Gemischs von Produkten der Formel (la) und/oder der Formel (Ib) mit einem oder mehreren Produkten der Formeln (II) oder (III), wobei die entstehenden Umsetzungsprodukte weiter zu Oligomeren oder mit Silanen umgesetzt werden können.

13. Zusammensetzung oder Umsetzungsprodukt nach Anspruch 11 oder 12, **dadurch gekennzeichnet, daß** sie bzw. es ein Produkt enthält, das sowohl in Wasser als auch in superkritischem Kohlendioxid mindestens zu je 0,0001 Mol pro Mol Wasser bzw. superkritischem Kohlendioxid löslich ist.

14. Zusammensetzung oder Umsetzungsprodukt nach einem oder mehreren der Ansprüche 11 bis 13, **dadurch gekennzeichnet, daß** das Umsetzungsprodukt oder die Zusammensetzung eine Löslichkeit in Wasser von 0,001 Mol bis 1 Mol pro Mol Wasser und eine Löslichkeit in superkritischem Kohlendioxid von 0,001 Mol bis 1 Mol pro Mol an superkritischem Kohlendioxid aufweist.

15. Zusammensetzung oder Umsetzungsprodukt nach einem oder mehreren der Ansprüche 11 bis 14, **dadurch gekennzeichnet, daß** in Formel (la) R¹ für -CH₃ oder den Isotridecylrest und/oder t für eine Zahl von 8 bis 10 steht.

16. Zusammensetzung oder Umsetzungsprodukt nach einem oder mehreren der Ansprüche 11 bis 15, **dadurch gekennzeichnet, daß** in Formel (III) mindestens einer der Reste R⁵ für -OR¹ steht.

17. Zusammensetzung oder Umsetzungsprodukt nach einem oder mehreren der Ansprüche 11 bis 16, **dadurch gekennzeichnet, daß** in Formel (IV) die beiden an die endständigen Si-Atome gebundenen Reste R⁶ für R¹ stehen.

18. Lösung eines Produkts der Formel (la) und/oder der Formel (Ib) oder eines Umsetzungsprodukts oder einer Zusammensetzung gemäß einem oder mehreren der Ansprüche 11 bis 17 in einem flüssigen Produkt in superkritischem Zustand.

19. Lösung nach Anspruch 18, **dadurch gekennzeichnet, daß** das flüssige Produkt superkritisches Kohlendioxid ist.

20. Lösung nach Anspruch 19, **dadurch gekennzeichnet, daß** die Konzentration des Produkts oder der Zusammensetzung in superkritischem Kohlendioxid im Bereich von 0,0005 bis 0,5 Gew% liegt.

21. Lösung nach einem oder mehreren der Ansprüche 18 bis 20, **dadurch gekennzeichnet, daß** die Lösung zusätzlich Produkte enthält, die für die Textilausrüstung und/oder die Textilfärbung und/oder für die Behandlung von Polymermaterialien geeignet sind.

22. Verwendung einer Lösung gemäß einem oder mehreren der Ansprüche 18 bis 21 zur Ausrüstung oder Färbung von Fasermaterialien.
